# EUROPEAN PATENT APPLICATION

(11) **EP 3 968 229 A1**
(43) Date of publication of application: **16.03.2022**
(21) Application number: 20195602.6
(22) Date of filing: 10.09.2020
(51) Int. Cl.: G06K 19/077

(54) **METHOD FOR MANUFACTURING CONTACTLESS SMART CARD MADE FROM RECYCLED MATERIAL HAVING LOW MELTING POINT AND RESULTING SMART CARD**

(71) Applicant: Graphene Security Limited, Manchester M13 9PL (GB)
(72) Inventor: ZHANG, JINGYU, HWEIAN COUNTY, FUJYAN PROVINCE (CN); CHEN, JIA-CING, 702 TAINAN (TW); CHANG, KUO-HSIN, 622 CHIAYI COUNTY (TW); LAI, CHUNG-PING, 302 HSINCHU COUNTY (TW)
(74) Representative: Cabinet Chaillot

(57) **Abstract**

A method for manufacturing contactless smart cards made from recycled materials having low melting point and resulting smart cards are revealed. The method includes the steps of preparing a contactless electronic part 10 including an antenna 11 and a RFID chip 12 on a surface of a removable substrate 13, transferring the contactless electronic part 10 to a first side surface 211 of a first thermoplastic piece 21 by a heating-and-pressing process, removing the removable substrate 13, and then attaching a second thermoplastic piece 22 to the first side surface 211 of the first thermoplastic piece 21 for enclosing the contactless electronic part 10 between the first thermoplastic piece 21 and the second thermoplastic piece 22. Thus the contactless electronic part 10 is adhered to the first thermoplastic piece 21 or the second thermoplastic piece 22 firmly. The present method not only can be applied to reprinting of recycled materials with low melting point in the European Union, the resulting smart card can also pass through the peel test.

## Description

### BACKGROUND OF THE INVENTION

### Technical Field

The present invention relates to a smart card, especially to a method for manufacturing contactless smart cards made from recycled materials having low melting point and resulting smart cards, able to be applied to reprinting of recycled materials with low melting point in the European Union.

### Description of Related Art

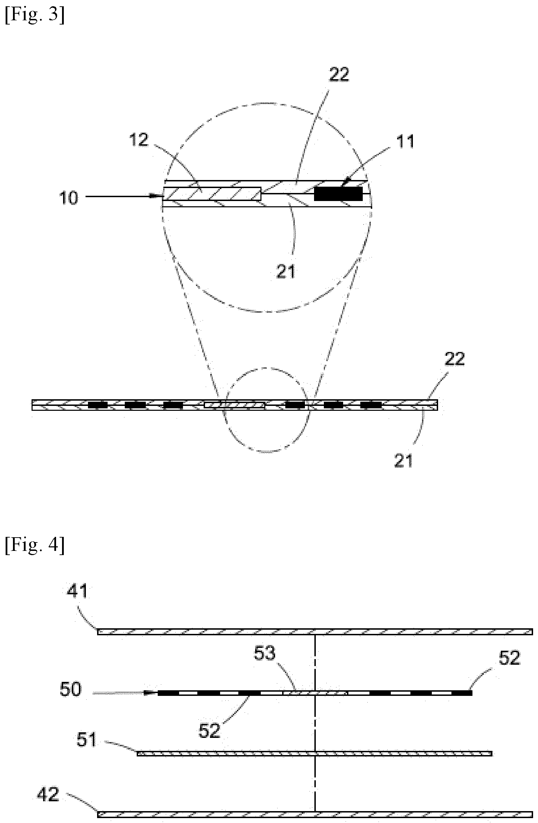

A smart card or integrated circuit (IC) card is typically a plastic card with an embedded microchip. According to communication interfaces for data exchange with related equipment, the smart cards are divided into two types-contact smart cards and contactless smart cards. The contact smart card needs to be in contact with read/write devices for data exchange while the contactless smart card exchanges data with the read/write devices through radio waves, without any contact between the smart card and the read/write devices. Radio Frequency Identification (RFID) smart card is one of the contactless smart cards. The RFID smart card includes an antenna and a RFID chip in which a microprocessor unit and a memory (such as RAM) is integrated. Thus data such as personal data, identification code, or product information can be saved in the RFID smart card. Refer to Fig. 4, a schematic drawing showing a sectional view of a RFID smart card available now. The RFID smart card available now (also called white smart card) includes an upper plastic sheet 41, a lower plastic sheet 42 and a RFID label 50. The RFID label consists of a substrate 51 such as PET substrate used as a carrier for mounting a RFID chip and an antenna. The process for manufacturing RFID smart cards available now has the following problems.
(A) The adhesive strength between the plastic sheets and the PET substrate of the RFID label 50 is insufficient so that the RFID smart card is easy to have delamination damage after long-term use or being bent.
(B) Owing to insufficient adhesive strength between the plastic sheets and the PET substrate of the RFID label 50, the smart card can't pass the peel test and unable to be applied to some cards such as bank cards with higher requirements for the working environment.
(C) For applications which need high peel strength such as bank cards, only the RFID smart card produced by direct metal coil lamination can meet the requirements. By the present invention, the upper layer and the lower layer of the plastic sheets made of the same material can be melted and joined to each other during the pressing process. Thus the problem of insufficient peel strength mentioned above can be solved.

A method for manufacturing white smart cards widely used now includes the following steps:
(1) preparing a RFID dry inlay (a semi-finished product). The inlay is an unfinished electronic RFID label, not packed yet. The inlays are classified as dry inlays or wet inlays. The dry inlay is having no adhesive backing and composed of antenna 52, chip 53 and substrate 51. The wet inlay is coated with an adhesive backing for being attached to an object directly and formed by antenna 52, chip 53, substrate 51 and adhesive backing.
(2) preparing two plastic sheets (an upper plastic sheet 41 and a lower plastic sheet 42) and laminate the RFID dry inlay provided in the step (1) between the two plastic sheets.
(3) getting a custom size by die-cutting to form RFID smart card shown in Fig. 4.

In the above step (2) of the manufacturing process available now, the RFID dry inlay is laminated between the plastic sheets by using specific laminating adhesive. In other manufacturing processes, the RFID dry inlay, as a laminate, is able to be adhered between the two plastic sheets by being heated and pressed if the upper and the lower plastic sheets are made from thermoplastic materials.

### SUMMARY OF THE INVENTION

Therefore it is a primary object of the present invention to provide a method for manufacturing contactless smart cards made from recycled materials having low melting point and resulting smart cards which are not only useful in reprinting of recycles materials with low melting point but also able to solve the problems of the processes available now mentioned above.

A method for manufacturing contactless smart cards made from recycled materials having low melting point according to the present invention includes the following steps:
preparing a contactless electronic part which includes an antenna and a RFID chip on a surface of a removable substrate;
preparing a first thermoplastic piece and a second thermoplastic piece;
adhering the antenna and the RFID chip of the contactless electronic part to a first side surface of the first thermoplastic piece by a heating-and-pressing process;
removing the removable substrate; and
attaching the second thermoplastic piece to the first side surface of the first thermoplastic piece for enclosing the antenna and the RFID chip of the contactless electronic part between the first thermoplastic piece and the second thermoplastic piece and then making materials for the first thermoplastic piece and the second thermoplastic piece melt and cohere together by a heating-and-pressing process.

Preferably, the removable substrate is a plastic substrate with a release coating or a paper substrate.

Preferably, the temperature, the time and the pressure of the heating-and-pressing process are ranging from 60°C∼300°C, 30 seconds to 20 minutes, and 1N to 400N respectively.

Preferably, the first thermoplastic piece and the second thermoplastic piece cohere together by the heating-and-pressing process in a way of sheet-to-sheet lamination or roll-to-roll rolling.

A contactless smart card made from recycled materials having low melting point according to the present invention includes a first thermoplastic piece, a second thermoplastic piece laminated to a first side surface of the first thermoplastic piece, and a contactless electronic part which includes an antenna and a RFID chip. The first thermoplastic piece and the second thermoplastic piece are laminated to each other by a heating-and-pressing process so as to make materials for the first thermoplastic piece and the second thermoplastic piece melt and cohere together. The contactless electronic part is not only adhered to at least one of the first thermoplastic piece and the second thermoplastic piece by a heating-and-pressing process, but also enclosed between the first thermoplastic piece and the second thermoplastic piece.

Preferably, the antenna is a metal etched antenna or a printed antenna. Preferably, the printed antenna is produced by a printing process using composite conductive ink. The composite conductive ink can be metal conductive ink, conductive carbon ink, conductive polymer ink and a combination thereof.

Preferably, the materials for the first thermoplastic piece and the second thermoplastic piece can be Polyvinyl Chloride (PVC), Acrylonitrile Butadiene Styrene (ABS), Polyhydroxyalkanoates (PHA), Polyethylene Terephthalate (PET), Polyethylene Terephthalate Glycol-Modified (PETG) plastic or Polycarbonate (PC).

The advantages and features of the present method and resulting smart cards are in that the antenna and the RFID chip of the contactless electronic part are firmly adhered to the materials for the first thermoplastic piece or the second thermoplastic piece. The method is very useful in reprinting of the recycles materials with low melting point in the EU and the smart card produced can also pass the peel test for smart cards.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein:
Fig. 1 is a flow chart of an embodiment showing steps of a method for manufacturing contactless smart cards made from recycled materials having low melting point and resulting smart cards according to the present invention;
Fig. 2A-2D are schematic drawings showing operations of an embodiment according to the present invention;
Fig. 3 is a schematic drawing showing a section of an embodiment according to the present invention;
Fig. 4 is a schematic drawing showing a section of a RFID smart card available now.

### DETAILED DESCRIPTION OF THE PREFERRED EMBODIMENT

The relative positions descried in the following embodiments, including upper, lower, left and right, unless otherwise specified, are based on the directions indicated by the components in the figures.

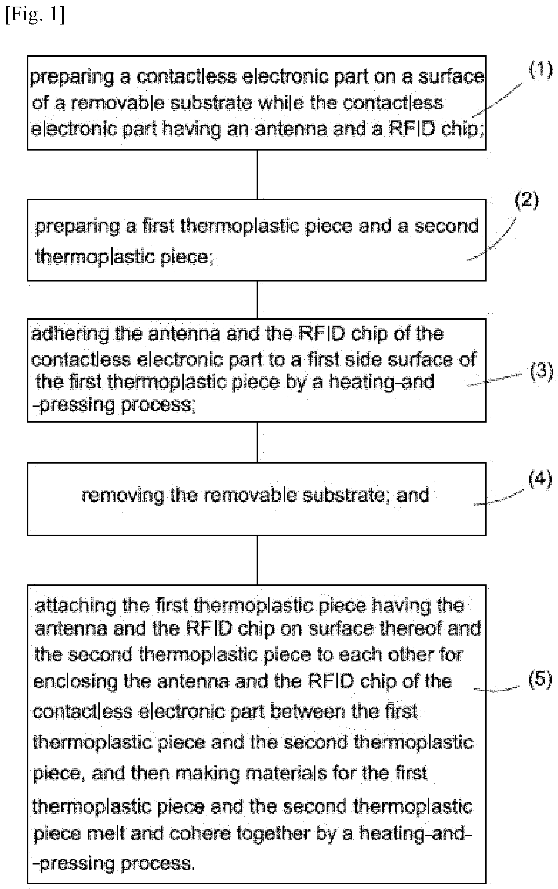

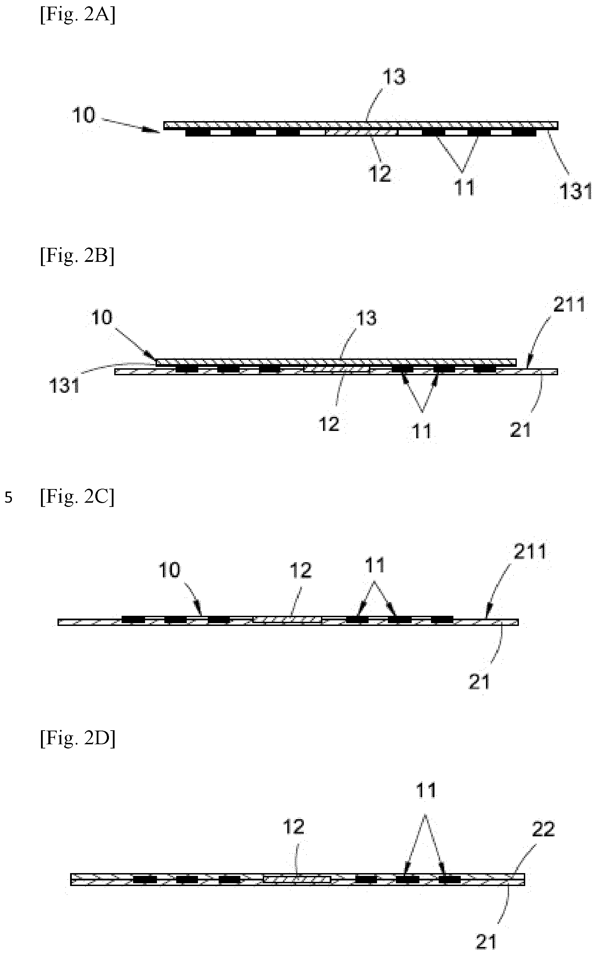

Refer to Fig. 1A and Fig. 2A-2D, a flow chart showing steps of a method for manufacturing contactless smart cards made from recycled materials having low melting point is revealed. A section showing structure of smart cards obtained by the above method is disclosed in Fig. 3.

A method for manufacturing contactless smart cards made from recycled materials having low melting point according to the present invention includes the following steps:
(1) preparing a contactless electronic part 10 on a surface of a removable substrate 13 while the contactless electronic part 10 including an antenna 11 and a RFID chip 12; wherein the antenna 11 and the RFID chip 12 have been electrically connected and the contactless electronic part 10 basically can be considered as a RFID dry inlay;
(2) preparing a first thermoplastic piece 21 and a second thermoplastic piece 22;
(3) adhering the antenna 11 and the RFID chip 12 of the contactless electronic part 10 to a first side surface 211 of the first thermoplastic piece 21 by a heating-and-pressing process (as shown in Fig. 2B); by the heating-and-pressing process in which heat and pressure are applied for a period of time, the antenna 11 and the RFID chip 12 of the contactless electronic part 10 are adhered to materials for the first thermoplastic piece 21 firmly and sufficient peel strength is provided;
(4) removing the removable substrate 13 (refer to Fig. 2C); and
(5) attaching the first thermoplastic piece 21 having the antenna 11 and the RFID chip 12 on surface thereof and the second thermoplastic piece 22 to each other; that is to say, the second thermoplastic piece 22 is attached to the first side surface 211 of the first thermoplastic piece 21 for enclosing the antenna 11 and the RFID chip 12 of the contactless electronic part 10 between the first thermoplastic piece 21 and the second thermoplastic piece 22; and then making materials for the first thermoplastic piece 21 and the second thermoplastic piece 22 melt and cohere together by a heating-and-pressing process(as shown in Fig. 2D).

In a preferred embodiment, the removable substrate 13 is a plastic substrate (such as polyethylene terephthalate (PET)) with a release coating 131, or a paper substrate (as shown in Fig. 2B). The antenna is preferably a metal etched antenna or a printed antenna. The printed antenna is produced by a printing process using composite conductive ink. The composite conductive ink can be metal conductive ink, conductive carbon ink, conductive polymer ink or the combinations of the above inks. After being formed on the removable substrate 13, the metal etched antenna or the printed antenna which is used as the antenna 11 can be easily separated from the surface of the removable substrate 13 in the step (4) of removing the removable substrate 13 (refer to Fig. 2C). The antenna 11 and the RFID chip 12 of the contactless electronic part 10 can be adhered to the first thermoplastic piece 21 securely by the heating-and-pressing process of the step (3).

The materials for the first thermoplastic piece 21 and the second thermoplastic piece 22 can be Polyvinyl Chloride (PVC), Acrylonitrile Butadiene Styrene (ABS), Polyhydroxyalkanoates (PHA), Polyethylene Terephthalate (PET), Polyethylene Terephthalate Glycol-Modified (PETG) plastic or Polycarbonate (PC). The second thermoplastic piece 22 is attached to the first side surface 211 of the first thermoplastic piece 21 and then the first thermoplastic piece 21 and the second thermoplastic piece 22 are laminated to each other by a heating-and-pressing process so as to make materials for the first thermoplastic piece 21 and the second thermoplastic piece 22 melt and cohere together. The contactless electronic part 10 is not only adhered to at least one of the first thermoplastic piece 21 and the second thermoplastic piece 22 by a heating-and-pressing process, but also enclosed between the first thermoplastic piece 21 and the second thermoplastic piece 22.

In a preferred embodiment, the temperature, the time and the pressure of the heating-and-pressing process in both the step (3) and the step (5) are ranging from 60 Celsius degrees (°C) to 300°C, 30 seconds to 20 minutes and 1N to 400N respectively.

In a preferred embodiment, the first thermoplastic piece 21 and the second thermoplastic piece 22 cohere together by the heating-and-pressing process in a way of sheet-to-sheet lamination or roll-to-roll rolling. There is no more substrate (used in conventional techniques such as PET substrate) located between the first thermoplastic piece 21 and the second thermoplastic piece 22 so that the materials for the first thermoplastic piece 21 and the second thermoplastic piece 22 are melted to hold the antenna 11 and the RFID chip 12 tightly.

A preferred embodiment:
Take the following embodiment as an example.
A. preparing a contactless electronic part 10 which is printed on a surface of a removable PET substrate and composed of an antenna 11 and a RFID chip 12.
B. aligning the contactless electronic part 10 mentioned in the step (A) with a PVC plastic piece having a thickness of 0.5 mm and then performing heating lamination at a pressure of 50N and temperature of 200°C for 5 minutes so that the antenna 11 and the RFID chip 12 of the contactless electronic part 10 are adhered to a surface of the PVC plastic piece.
C. tearing off the PET substrate of the contactless electronic part 10 mentioned in the step (B).
D. laminating a semi-product of the PVC plastic piece with the transferred antenna 11 and the RFID chip 12 obtained in the step (C) to another PVC plastic piece with the thickness of 0.5mm under the conditions mentioned in the step (B) to get a pure PVC smart card without the PET substrate between the PVC plastic pieces.
E. lastly cutting the pure PVC smart card without the PET substrate between the PVC plastic pieces obtained in the step (D) into the required size and measuring read performance of the PVC smart card for ensuring that the available read performance is 1cm in order to meet requirements for high-frequency smart cards.

Additional advantages and modifications will readily occur to those skilled in the art. Therefore, the invention in its broader aspects is not limited to the specific details, and representative devices shown and described herein. Accordingly, various modifications may be made without departing from the spirit or scope of the general inventive concept as defined by the appended claims and their equivalent.

## Claims

1. A method for manufacturing contactless smart cards made from recycled materials having low melting point and resulting smart cards comprising the steps of:
preparing a contactless electronic part 10 on a surface of a removable substrate 13 while the contactless electronic part 10 having an antenna 11 and a RFID chip 12;
preparing a first thermoplastic piece 21 and a second thermoplastic piece 22;
adhering the antenna 11 and the RFID chip 12 of the contactless electronic part 10 to a first side surface 211 of the first thermoplastic piece 21 by a heating-and-pressing process;
removing the removable substrate 13; and
attaching the second thermoplastic piece 22 to the first side surface 211 of the first thermoplastic piece 21 for enclosing the antenna 11 and the RFID chip 12 of the contactless electronic part 10 between the first thermoplastic piece 21 and the second thermoplastic piece 22, and then making materials for the first thermoplastic piece 21 and the second thermoplastic piece 22 melt and cohere together by a heating-and-pressing process.

2. The method as claimed in claim 1, wherein the antenna 11 is a metal etched antenna.

3. The method as claimed in claim 2, wherein the antenna 11 is a printed antenna produced by a printing process using composite conductive ink; the composite conductive ink is selected from the group consisting of metal conductive ink, conductive carbon ink, conductive polymer ink and a combination thereof.

4. The method as claimed in claim 1, wherein the materials for the first thermoplastic piece 21 and the second thermoplastic piece 22 are selected from the group consisting of Polyvinyl Chloride (PVC), Acrylonitrile Butadiene Styrene (ABS), Polyhydroxyalkanoates (PHA), Polyethylene Terephthalate (PET), Polyethylene Terephthalate Glycol-Modified (PETG) plastic and Polycarbonate (PC).

5. The method as claimed in claim 1, wherein the removable substrate 13 is selected from the group consisting of a plastic substrate with a release coating 131 and a paper substrate.

6. The method as claimed in claim 1, wherein temperature, time and pressure of the heating-and-pressing process are ranging from 60°C∼300°C, 30 seconds to 20 minutes, and 1N to 400N respectively.

7. The method as claimed in claim 1, wherein the first thermoplastic piece 21 and the second thermoplastic piece 22 cohere together by the heating-and-pressing process in a way of sheet-to-sheet lamination or roll-to-roll rolling.

8. A contactless smart card made from recycled materials with low melting point comprising:
a first thermoplastic piece 21,
a second thermoplastic piece 22 laminated on a first side surface 211 of the first thermoplastic piece 21, and
a contactless electronic part 10 which includes an antenna 11 and a RFID chip 12;
wherein the first thermoplastic piece 21 and the second thermoplastic piece 22 are laminated to each other by a heating-and-pressing process so as to make materials for the first thermoplastic piece 21 and the second thermoplastic piece 22 melt and cohere together; the contactless electronic part 10 is not only adhered to at least one of the first thermoplastic piece 21 and the second thermoplastic piece 22 by a heating-and-pressing process, but also enclosed between the first thermoplastic piece 21 and the second thermoplastic piece 22.

9. The device as claimed in claim 8, wherein the antenna 11 is a metal etched antenna.

10. The device as claimed in claim 8, wherein the antenna 11 is a printed antenna produced by a printing process using composite conductive ink; the composite conductive ink is selected from the group consisting of metal conductive ink, conductive carbon ink, conductive polymer ink and a combination thereof.

11. The device as claimed in claim 8, wherein the materials for the first thermoplastic piece 21 and the second thermoplastic piece 22 are selected from the group consisting of Polyvinyl Chloride (PVC), Acrylonitrile Butadiene Styrene (ABS), Polyhydroxyalkanoates (PHA), Polyethylene Terephthalate (PET), Polyethylene Terephthalate Glycol-Modified (PETG) plastic and Polycarbonate (PC).
